# EUROPÄISCHE PATENTSCHRIFT

(11) **EP 0 959 189 B1**
(45) Veröffentlichungstag und Bekanntmachung des Hinweises auf die Patenterteilung: **03.05.2006**
(21) Anmeldenummer: 99102571.9
(22) Anmeldetag: 11.02.1999
(51) Int. Cl.: E04B 7/20, E04B 1/80

(54) **Wärmedämmplatte**
Heat insulation panel
Panneau d'isolation thermique

(30) Priorität: 20.05.1998 DE 19822659
(43) Veröffentlichungstag der Anmeldung: 24.11.1999
(73) Patentinhaber: puren GmbH, 88662 Überlingen (DE)
(72) Erfinder: Schlott, Wolfgang, 15366 Neuenhagen (DE)
(74) Vertreter: Patentanwälte Westphal, Mussgnug & Partner

(56) Entgegenhaltungen:
- DE-A- 2 953 539
- DE-A- 3 401 302
- DE-A- 3 441 093
- DE-A- 4 241 053
- DE-U- 8 804 611

## Beschreibung

Die Erfindung betrifft eine rechteckige Wärmedämmplatte nach dem Oberbegriff des Anspruchs 1.

Es sind verschiedene Wärmedämmplatten mit integrierten, d.h. in ihre Oberfläche oder unterhalb dieser eingebetteten Befestigungsleisten bekannt (Cf. DE-U-8804611), die aus Holz oder Metall bestehen und parallel zu wenigstens einer Rechteckseite der Platte verlaufen. Durch die Anordnung der Befestigungsleisten jeweils parallel zu einer Rechteckseite ist die Befestigungsmöglichkeit der Platte sehr eingeschränkt, da bei der Befestigung von Latten, z.B. Dachlatten, oder dergl. genaue Abstände eingehalten werden müssen. Dadurch wird die handwerkliche Ausführung erschwert und es ist eine Minimierung von Verschnitt der Wärmedämmplatten nur sehr begrenzt möglich.

Zur Lösung dieses Problems wird die eingangs genannte Wärmedämmplatte durch die kennzeichnenden Merkmale des Anspruchs 1 so verbessert, daß irgendwelche Dachlatten, Leisten oder andere Tragkonstruktionen auf der Oberseite der Wärmedämmplatte in weitgehend beliebigen Abständen befestigt werden können. Dadurch ergeben sich leichte Handhabung der Platten, kurze Verarbeitungszeiten, geringer Verschnitt und große Variabilität bei der praktischen Ausführung von wärmegedämmten Gesamtaufbauten einschließlich Dacheindeckung. Die erfindungsgemäße Wärmedämmplatte kann sowohl bei Auflegesystemen, wie Steildächern, als auch unterhalb der Dachsparren sowie in senkrechten Aufbauten an einer Wand eingesetzt werden.

Die Unteransprüche sind auf vorteilhafte Ausgestaltungen der Erfindung gerichtet. So ist nach Anspruch 2 das Material der Befestigungsleisten zweckmäßigerweise wärmedämmend, was den Nachteil der bekannten Befestigungsleisten aus Holz oder Metall aufhebt, die einen schlechten Wärmedämmwert aufweisen. Überdies unterliegt Holz bei Feuchteeinwirkung der Verrottung. Integrierte Metalleisten haben den Nachteil, daß infolge der unterschiedlichen Materialeigenschaften zwischen Metall und üblichen Wärmedämmstoffen Spannungen in der Platte entstehen. Die Ansprüche 3 und 4 sind daher auf besonders vorteilhafte Materialien für die Befestigungsleisten gerichtet, welche die Nachteile der bekannten Befestigungsleisten nicht aufweisen. Als besonders zweckmäßig erweist sich eine Kombination des recyclierten Polyurethan-Werkstoffs nach Anspruchs 3 mit einer Ausführung der Platte selbst wenigstens großenteils aus Polyurethan gemäß Anspruch 5.

Zum äußeren Schutz gegen Beschädigung und Feuchtigkeitseinwirkungen kann die Wärmedämmplatte gemäß Anspruch 6 zusätzlich mit elastischen oder steifen Deckschichten versehen sein.

Nach Anspruch 7 kann die Deckschicht überstehende Ränder zum Überdecken der mit angrenzenden Wärmedämmplatten gebildeten Stoßfugen aufweisen.

Zur besseren und insbesondere wärmebrückenfreien Halterung der Wärmedämmplatten sind sie gemäß Anspruch 8 an zwei gegenüberliegenden Stirnflächen mit stufenförmigen Ausfräsungen zum Einhaken von Haltern versehen, die an der Unterkonstruktion befestigt werden. Dadurch ergeben sich keine Wärmebrücken durch Halter, welche von der Unterseite zur Oberseite der Platten durchgehen.

Zur besseren Belüftung können die Wärmedämmplatten gemäß Anspruch 8 zusätzlich Luftschächte enthalten.

Besonders zweckmäßig, insbesondere in ökologischer Hinsicht, ist die Verwendung des recyclierten Polyurethan-Werkstoffs gemäß Anspruch 3, da die aus diesem Material hergestellten Befestigungsleisten selbst wieder recyclierbar sind, wie auch die Wärmedämmplatten selbst, wenn sie gemäß Anspruch 5 aus Polyurethan bestehen. Insbesondere der für die Befestigungsleisten vorzugsweise verwendete recyclierte Polyurethan-Werkstoff gemäß Anspruch 3 besitzt eine Wärmeleitfähigkeit unter 0,075 W/K·m, wodurch die Wärmedämmung der Platten in keiner Weise beeinträchtigt wird.

Anhand der Figuren werden zweckmäßige Ausführungsformen der Erfindung beispielhaft näher erläutert. Es zeigen:
- Figur 1: eine Schrägansicht eines Ausschnitts einer Dachkonstruktion mit erfindungsgemäßen Wärmedämmplatten,
- Figur 2: einen Schnitt etwa längs der Linie II-II in Fig.1, wobei jedoch zur übersichtlicheren Darstellung der Maßstab in Richtung der Schnittlinie stark verkürzt ist,
- Figuren 3 und 4: Ausschnitte aus Schrägansichten anderer Dachkonstruktionen mit erfindungsgemäßen Wärmedämmplatten,
- Figur 5a: eine Aufsicht auf eine erste Ausführungsform einer erfindungsgemäßen Wärmedämmplatte,
- Figur 5b: einen Schnitt längs der Linie Vb-Vb in Fig. 5a,
- Figur 5c: einen Schnitt längs der Linie Vc-Vc in Fig.5a,
- Figur 5d: einen Teilschnitt längs der Linie Vd-Vd in Fig.5a,
- Figur 6a: eine Aufsicht auf eine zweite Ausführungsform der erfindungsgemäßen Wärmedämmplatte,
- Figur 6b: einen Schnitt längs der Linie VIb-VIb in Fig.6a,
- Figur 6c: einen Schnitt längs der Linie VIc-VIc in Fig.6a,
- Figur 6d: einen Schnitt längs der Linie VId-VId in Fig.6a,
- Figur 7a: eine Aufsicht auf eine dritte Ausführungsform der erfindungsgemäßen Wärmedämmplatte,
- Figur 7b: einen Schnitt längs der Linie VIIb-VIIb in Fig.7a,
- Figur 7c: einen Schnitt längs der Linie VIIc-VIIc in Fig.7a,
- Figur 7d: einen Schnitt längs der Linie VIId-VIId in Fig.7a,
- Figur 8a: eine Aufsicht auf eine vierte Ausführungsform der erfindungsgemäßen Wärmedämmplatte,
- Figur 8b: einen Schnitt längs der Linie VIIIb-VIIIb in Fig. 8a,
- Figur 8c: einen Schnitt längs der Linie VIIIc-VIIIc in Fig. 8a,
- Figur 8d: einen Schnitt längs der Linie VIIId-VIIId in Fig. 8a,
- Figur 9a: eine Aufsicht auf eine fünfte Ausführungsform der erfindungsgemäßen Wärmedämmplatte,
- Figur 9b: einen Schnitt längs der Linie IXb-IXb in Fig.9a,
- Figur 9c: einen Schnitt längs der Linie IXc-IXc in Fig.9a,
- Figur 9d: einen Schnitt längs der Linie IXd-IXd in Fig.9a,
- Figur 10a: eine Aufsicht auf eine sechste Ausführungsform der erfindungsgemäßen Wärmedämmplatte,
- Figur 10b: einen Schnitt längs der Linie Xb-Xb in Fig.10a,
- Figur 10c: einen Schnitt längs der Linie Xc-Xc in Fig.10a,
- Figur 10d: einen Schnitt längs der Linie Xd-Xd in Fig.10a,
- Figur 11a: eine Aufsicht auf eine siebte Ausführungsform der erfindungsgemäßen Wärmedämmplatte,
- Figur 11b: einen Schnitt längs der Linie XIb-XIb in Fig.11a,
- Figur 11c: einen Schnitt längs der Linie XIc-XIc in Fig.11a,
- Figur 11d: einen Schnitt längs der Linie XId-XId in Fig.11a,
- Figur 12a: eine Aufsicht auf eine achte Ausführungsform der erfindungsgemäßen Wärmedämmplatte,
- Figur 12b: einen Schnitt längs der Linie XIIb-XIIb in Fig. 12a,
- Figur 12c: einen Schnitt längs der Linie XIIc-XIIc in Fig. 12a,
- Figur 12d: einen Schnitt längs der Linie XIId-XIId in Fig. 12a,
- Figur 13a: eine Aufsicht auf eine neunte Ausführungsform der erfindungsgemäßen Wärmedämmplatte,
- Figur 13b: einen Schnitt längs der Linie XIIIb-XIIIb in Fig. 13a,
- Figur 13c: einen Schnitt längs der Linie XIIIc-XIIIc in Fig. 13a,
- Figur 13d: einen Schnitt längs der Linie XIIId-XIIId,
- Figur 14a: eine Aufsicht auf eine zehnte Ausführungsform der erfindungsgemäßen Wärmedämmplatte,
- Figur 14b: einen Schnitt längs der Linie XIVb-XIVb in Fig. 14a,
- Figur 14c: einen Schnitt längs der Linie XIVc-XIVc in Fig. 14a,
- Figur 14d: einen Schnitt längs der Linie XIVd-XIVd in Fig. 14a,
- Figur 15a: eine Aufsicht auf eine elfte Ausführungsform der erfindungsgemäßen Wärmedämmplatte,
- Figur 15b: einen Schnitt längs der Linie XVb-XVb in Fig. 15a,
- Figur 15c: einen Schnitt längs der Linie XVc-XVc in Fig. 15a,
- Figur 15d: einen Schnitt längs der Linie XVd-XVd in Fig. 15a,
- Figur 16a: eine Aufsicht auf eine zwölfte Ausführungsform der erfindungsgemäßen Wärmedämmplatte,
- Figur 16b: einen Schnitt längs der Linie XVIb-XVIb in Fig. 16a,
- Figur 16c: einen Schnitt längs der Linie XVIc-XVIc in Fig. 16a, und
- Figur 16d: einen Schnitt längs der Linie XVId-XVId in Fig. 16a.

In allen Figuren sind für gleiche oder gleichartige Teile die gleichen Bezugszeichen verwendet.

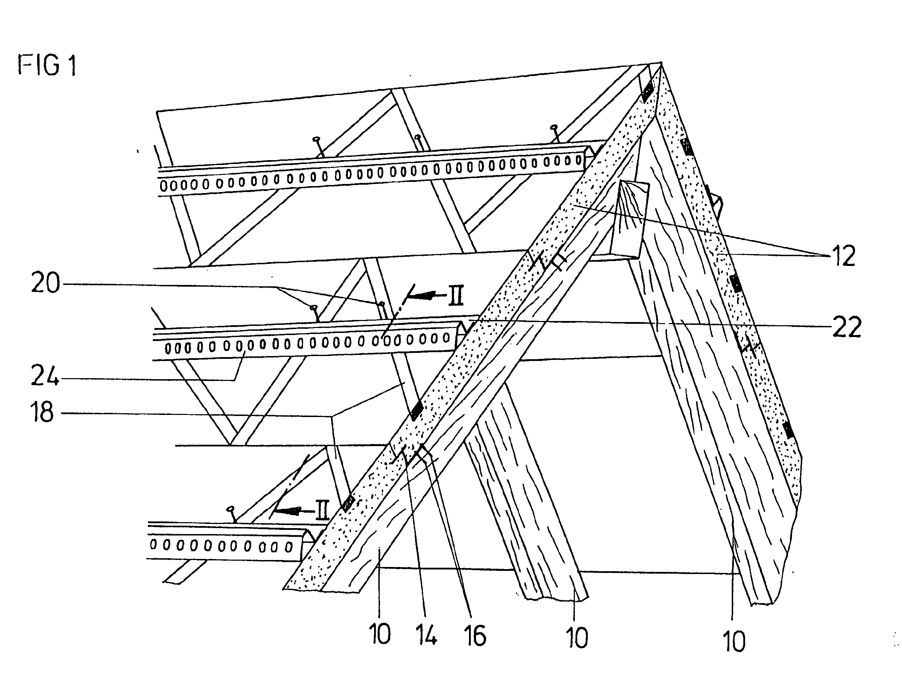

Bei der in Fig.1 dargestellten Dachkonstruktion ist eine aus Balken 10 bestehende Unterkonstruktion eines giebelförmigen Daches vorgesehen, auf welcher eine aus erfindungsgemäßen Wärmedämmplatten 12 bestehende Dämmschicht aufruht. Die einzelnen Wärmedämmplatten 12 werden von weiter unten erläuterten abgewinkelten Haltern 14 gehalten, die ihrerseits mit den Balken 10 der Unterkonstruktion durch Schrauben 16 verschraubt sind. Bündig in die Oberfläche jeder Wärmedämmplatte 12 sind in Zickzackform unter 45° gegen die Seiten der Platte verlaufende, ebenfalls wärmedämmende und nicht verrottende Befestigungsleisten oder Befestigungsstreifen 18 eingebettet. Mittels Schrauben oder Nägeln 20 sind auf der Oberseite der Wärmedämmplatten 12 und der Befestigungsstreifen 18 aufliegende Haltestege 22 von metallischen, etwa dreieckförmig profilierten Dachlatten 24 an den Befestigungsstreifen 18 festgelegt. Durch die schräge Anordnung der Befestigungsstreifens 18 in den Wärmedämmplatten 12 können die Dachlatten 24 in weitgehend beliebiger Lage, d.h. in beliebigen Abständen voneinander sicher an den Befestigungsstreifen 18 und somit an den Wärmedämmplatten 12 dauerhaft befestigt werden.

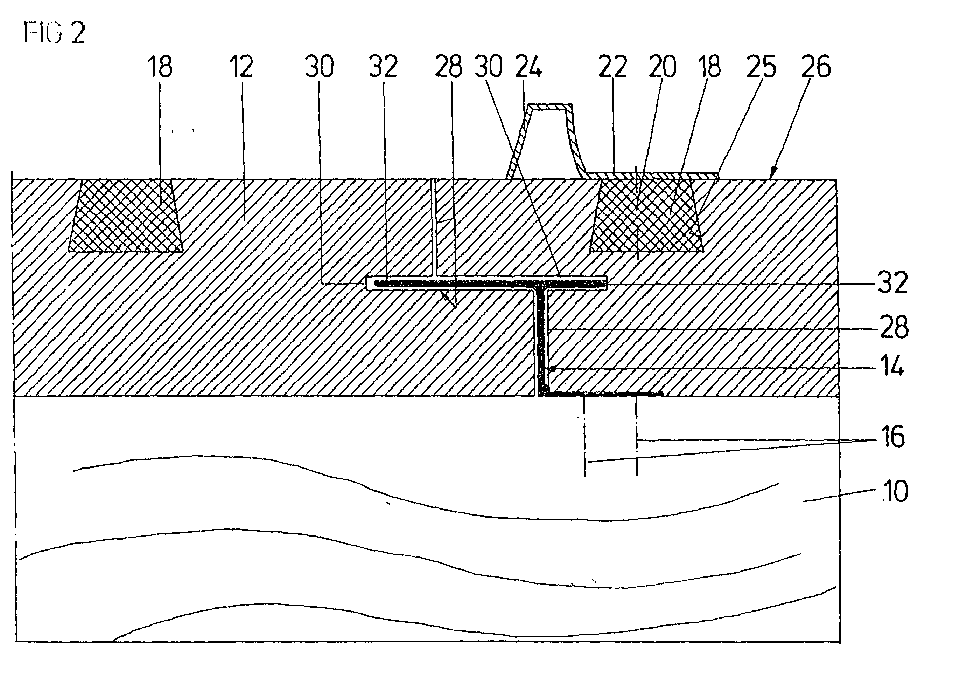

Aus dem vergrößerten, in Querrichtung teilweise stark zusammengezogenen Teilschnitt der Fig.2 ist deutlich zu sehen, wie die sich nach unten leicht erweiternden Befestigungsstreifen 18 in gleichartig hinterschnittene Ausnehmungen 25 der Wärmedämmplatten 12 derart eingebettet sind, daß ihre Oberfläche mit der Oberfläche 26 der jeweiligen Wärmedämmplatte 12 bündig liegt. Auf dieser Oberfläche des Befestigungsstreifens 18 liegt der flache Haltesteg 22 einer Dachlatte 24 auf und wird durch in den Befestigungsstreifen 18 eingeschraubte Schrauben 20 festgehalten.

Einerseits zum bündigen Ineinandergreifen benachbarter Wärmedämmplatten und andererseits zum Einhaken in die Halter 14 ist die parallel zu den Dachlatten 24 verlaufende Stirnfläche jeder Wärmedämmplatte 12 jeweils mit einer stufenförmigen Ausfräsung 28 versehen, die jeweils durch einen von jeder Ecke der stufenförmigen Ausfräsung 28 ausgehenden, parallel zur Oberfläche 27 verlaufenden Schlitz 30 verlängert ist. In jeden Schlitz 30 kann bei der Montage der Wärmedämmplatten 12 jeweils ein Steg 32 des Halters 14 aufgenommen werden, was eine hervorragende wärmebrückenfreie Halterung der Wärmedämmplatten 12 auf der Unterkonstruktion 10 ergibt.

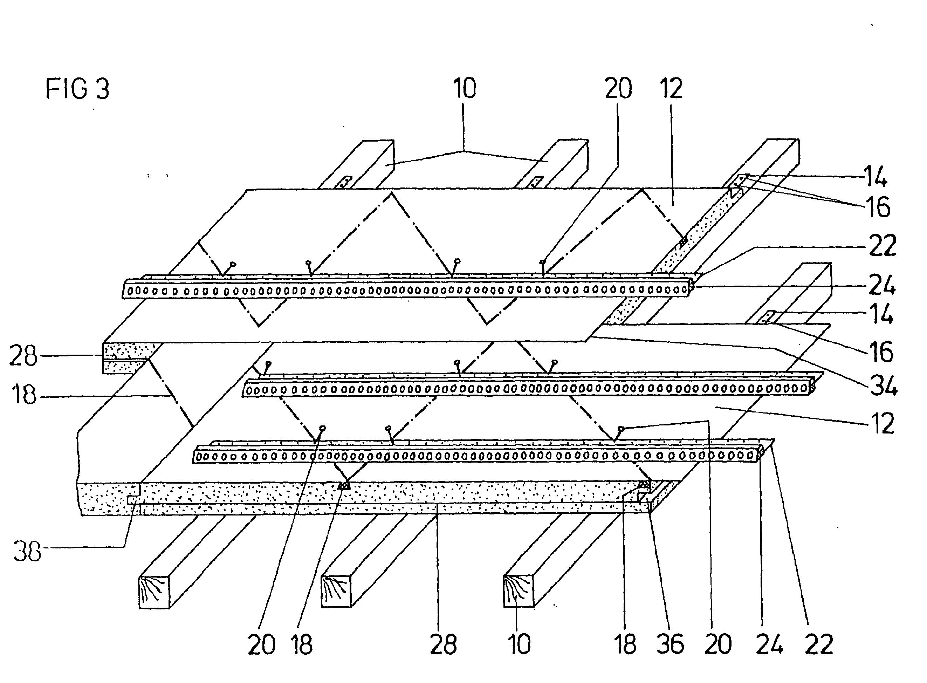

Der Dachaufbau gemäß Fig.3 ist im wesentlichen gleich aufgebaut wie der Dachaufbau gemäß Fig.1, wobei jedoch aus Fig.3 zusätzlich ersichtlich ist, daß die einzelnen Wärmedämmplatten entsprechend der Unterkonstruktion mit beliebigen Ausschnitten 34 versehen werden können, um jeweils eine optimale Anpassung an die Unterkonstruktion bei minimalen Verschnitt zu erreichen. Außerdem ist in Fig.3 zu sehen, wie die senkrecht zu den Dachlatten 24 verlaufenden Stirnflächen jeder Wärmedämmplatte 12 auf einer Seite mit einer rechteckigen Nut 36 und auf der gegenüberliegenden Seite mit einer in die rechteckige Nut 36 passenden Feder 38 versehen ist. Die Befestigungsstreifen 18 sind in Fig.3 nur durch strichpunktierte Linien angedeutet.

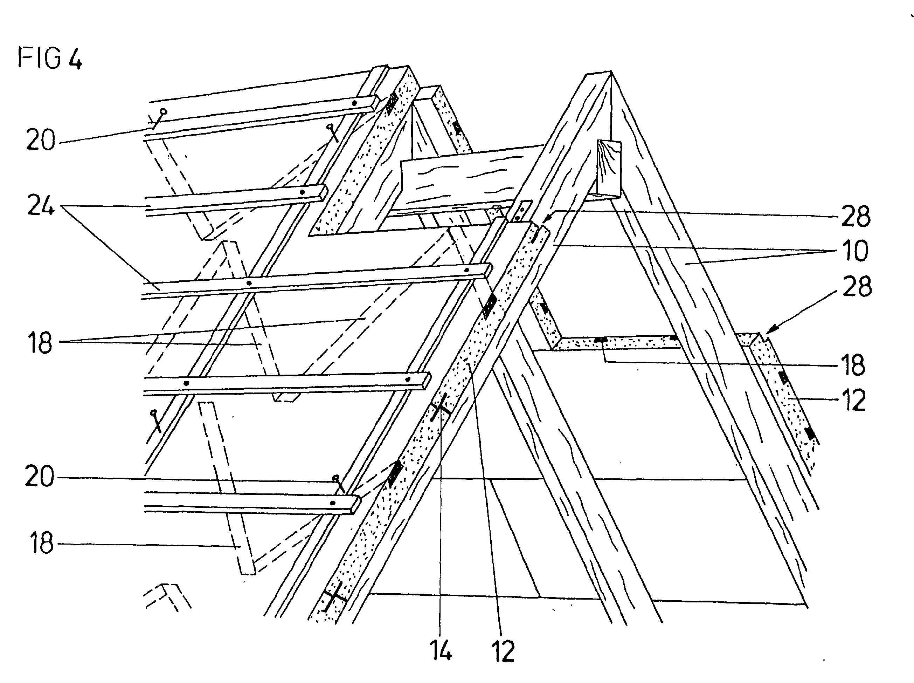

Die Dachkonstruktion gemäß Fig.4 unterscheidet sich von der in Fig. 1 gezeigten dadurch, daß statt profilierter Dachlatten aus Metall einfache Dachlatten 24 aus Holz oder Kunststoff mit rechteckigem Querschnitt verwendet sind, die mittels Schrauben 20 oder Nägeln an den Befestigungsstreifen 18 befestigt sind.

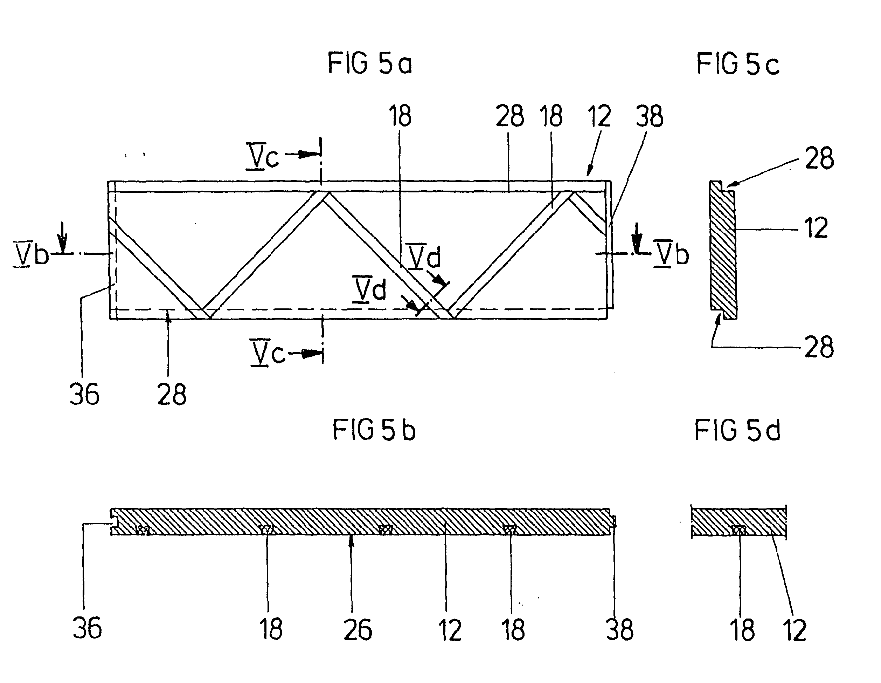

In den restlichen Figuren sind zwölf verschiedene Ausführungsformen der erfindungsgemäßen Wärmedämmplatte 12 mit unterschiedlich geformten und angeordneten Befestigungsleisten 18 dargestellt. Die erste Ausführungsform gemäß Figuren 5a-d weist zickzackförmig unter etwa 45° gegen die Rechteckseiten der Wärmedämmplatten 12 verlaufende Befestigungsstreifen 18 auf, die mit der Oberseite 26 der Wärmedämmplatte 12 bündig liegen.

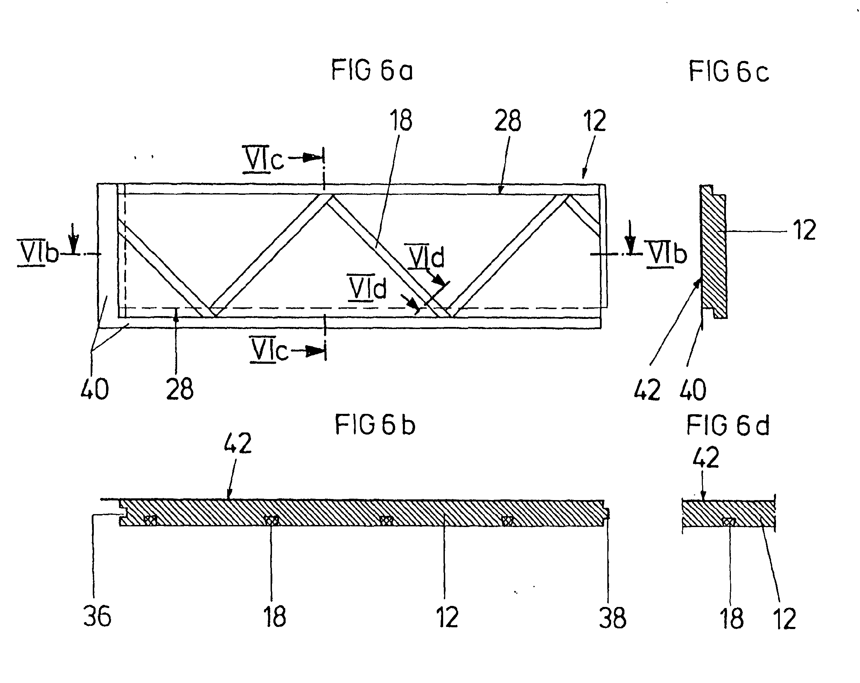

Die in den Figuren 6a-d dargestellte zweite Ausführungsform weist ebenso geformte Befestigungsstreifen 18 auf. Zusätzlich ist jedoch bei dieser Ausführungsform eine auf zwei aneinandergrenzenden Seiten über den Umriß der Wärmedämmplatte 12 mit einem vorstehenden Rand 40 vorstehende Deckschicht 42 vorgesehen. Die überstehenden Ränder 40 dienen zur Abdeckung der mit angrenzenden Wärmedämmplatten 12 gebildeten Stoßfugen.

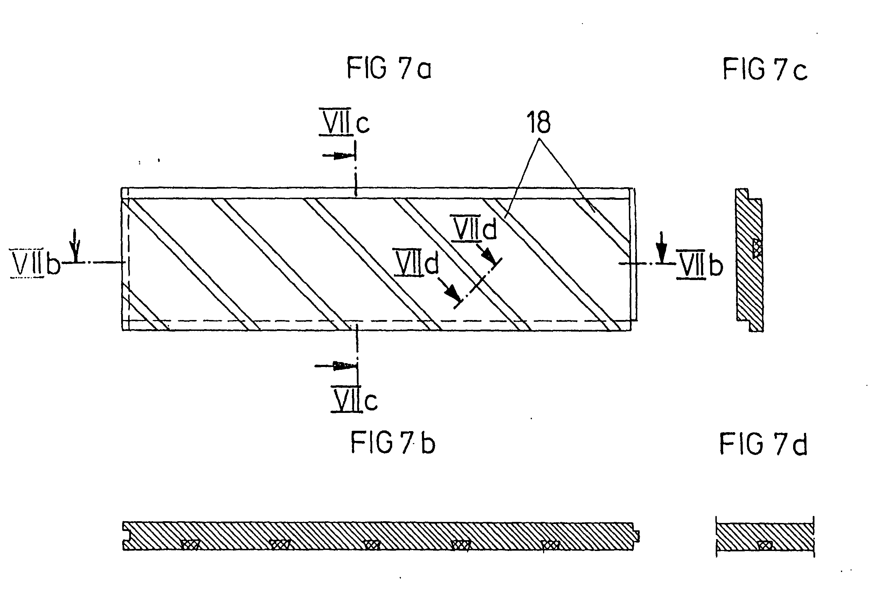

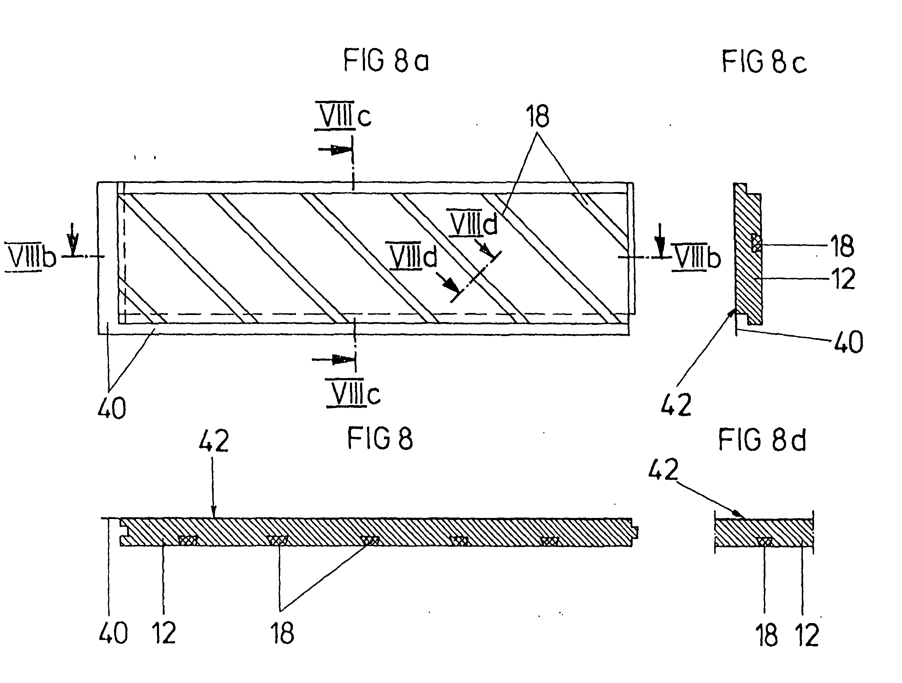

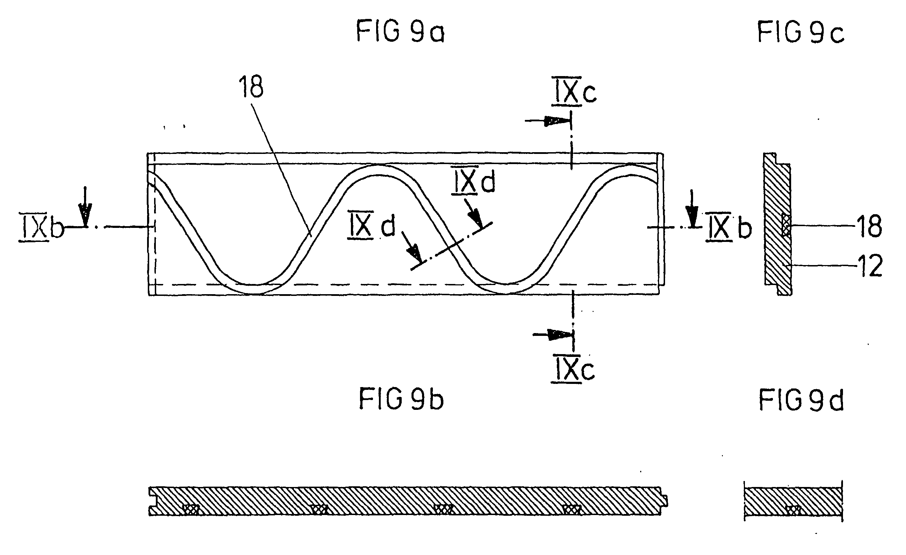

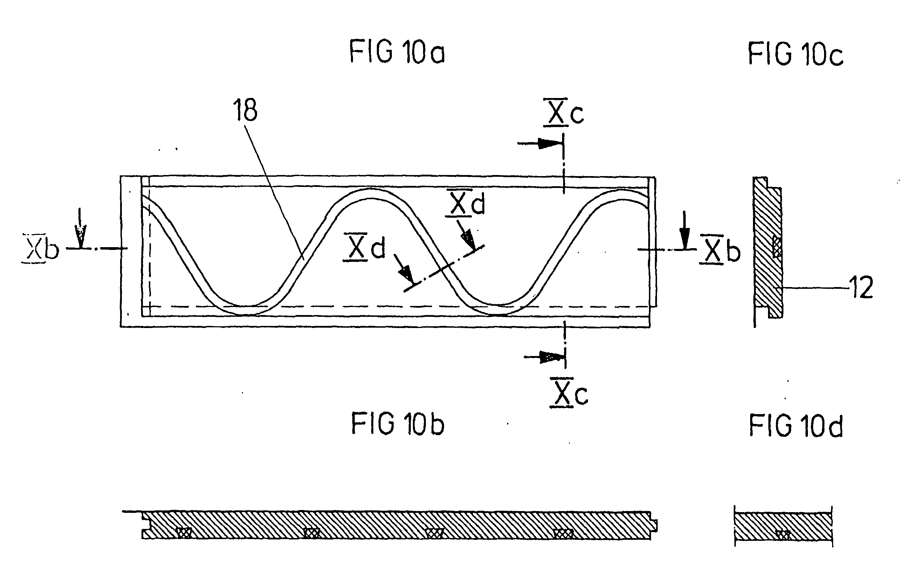

Die dritte Ausführungsform gemäß Figuren 7a-d unterscheidet sich von den beiden vorangehenden dadurch, daß die Befestigungsstreifen 18 nicht zickzackförmig, sondern parallel zueinander ebenfalls etwa unter 45° gegen die Rechteckseiten der Wärmedämmplatte 12 angeordnet sind. Das gleiche gilt für die vierte Ausführungsform gemäß Figuren 8a-d, wobei jedoch zusätzlich wie bei der zweiten Ausführungsform gemäß Fig.6a-d eine zweiseitig überstehende Deckschicht 42 vorgesehen ist. Bei der fünften Ausführungsform gemäß Figuren 9a-d und bei der sechsten Ausführungsform gemäß Figuren 10a-d sind schlangenlinienförmig gewundene Befestigungsstreifen 18 vorgesehen. Im übrigen unterscheiden sich diese Ausführungsformen nicht von der ersten bzw. zweiten Ausführungsform.

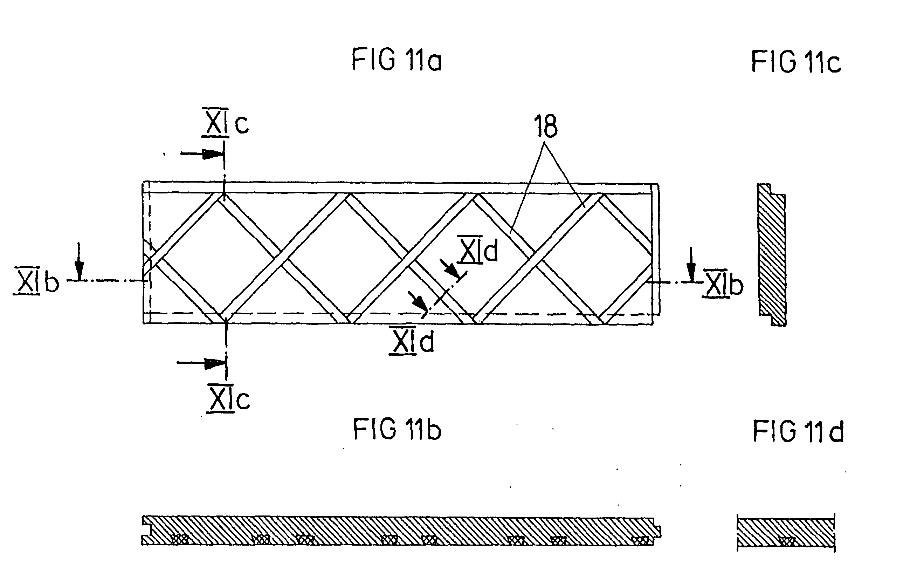

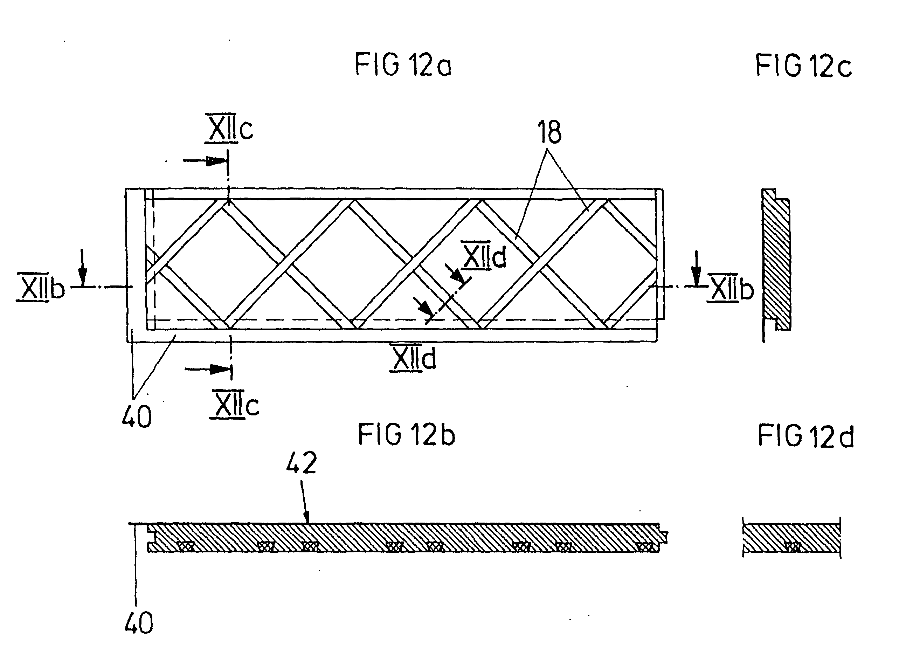

Bei der siebten Ausführungsform gemäß Figuren 11a-d und achten Ausführungsform gemäß Figuren 12a-d sind wie bei der ersten Ausführungsform zickzackförmig sich über die Oberfläche der Wärmedämmplatte 12 erstreckende Befestigungsstreifen 18 vorgesehen, die sich zusätzlich gegenseitig so überschneiden, daß ein karoartiges Muster gebildet wird.

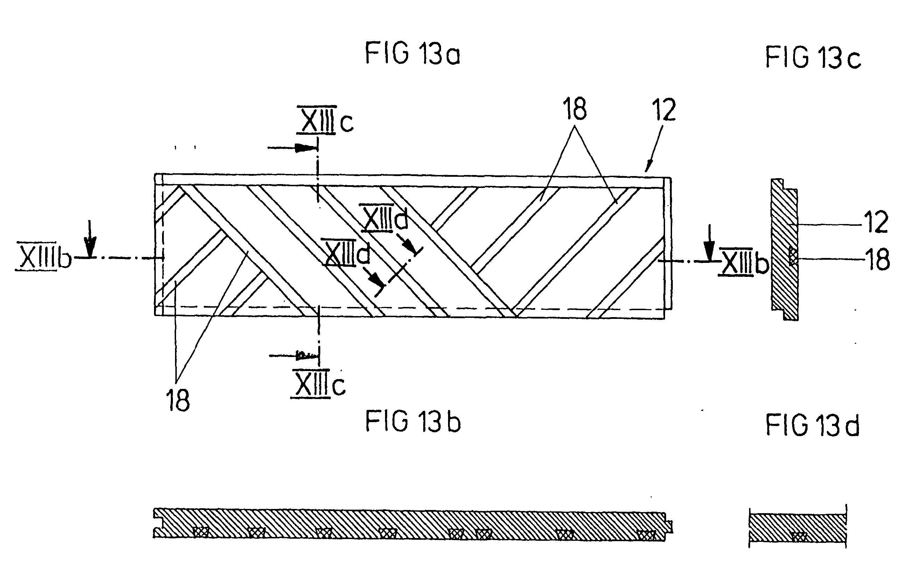

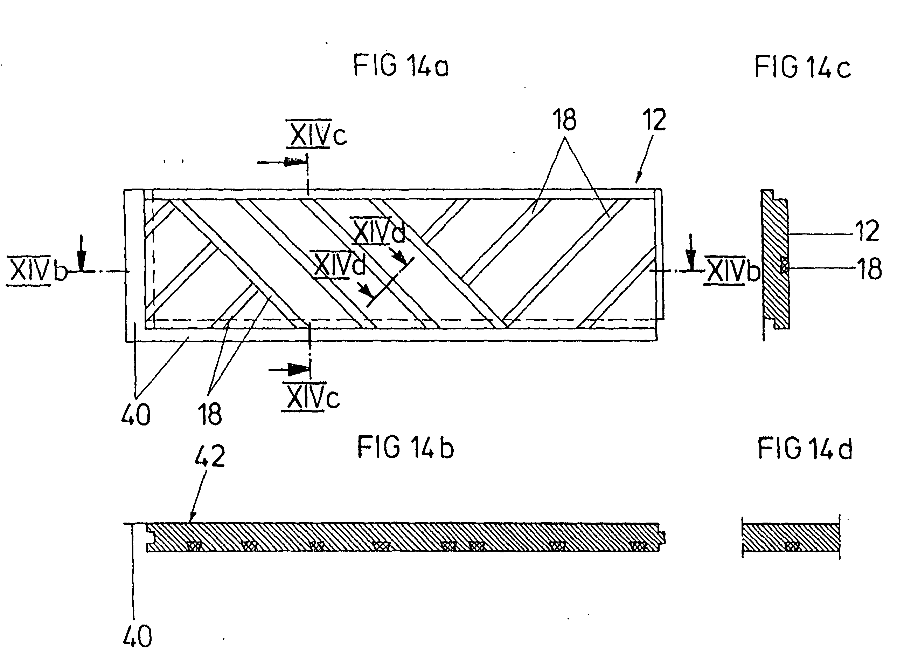

Bei der neunten und zehnten Ausführungsform gemäß Figuren 13a-d bzw. Figuren 14a-d sind die Befestigungsstreifen 18 abschnittsweise parallel zueinander verlegt, wobei jedoch die Befestigungsstreifen 18 der in Längsrichtung der Wärmedämmplatte 12 aufeinanderfolgenden Abschnitte jeweils aufeinander senkrecht stehen, wobei sie mit den Rechteckseiten der Platte wiederum einen Winkel von 45° einschließen.

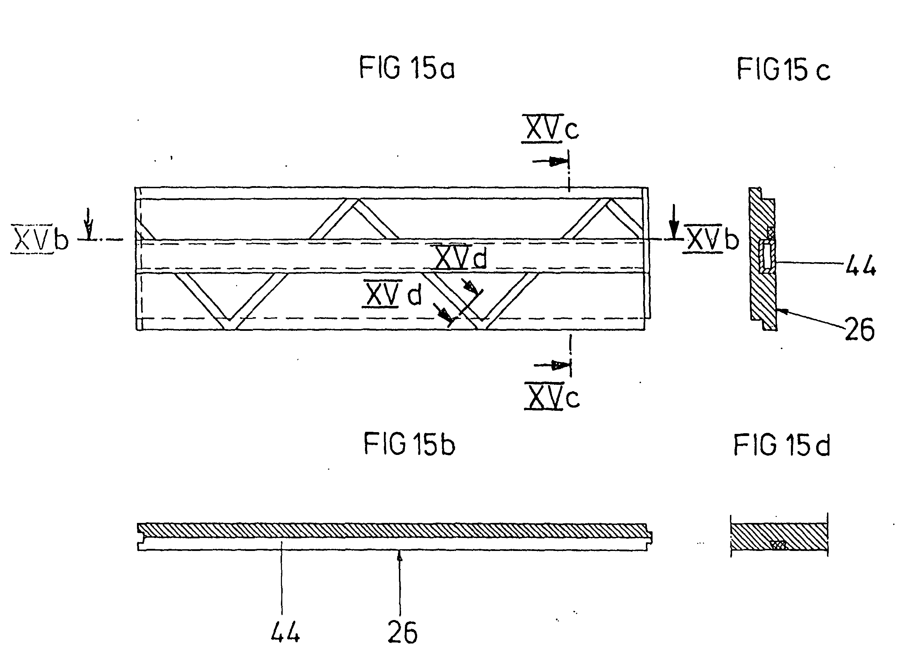

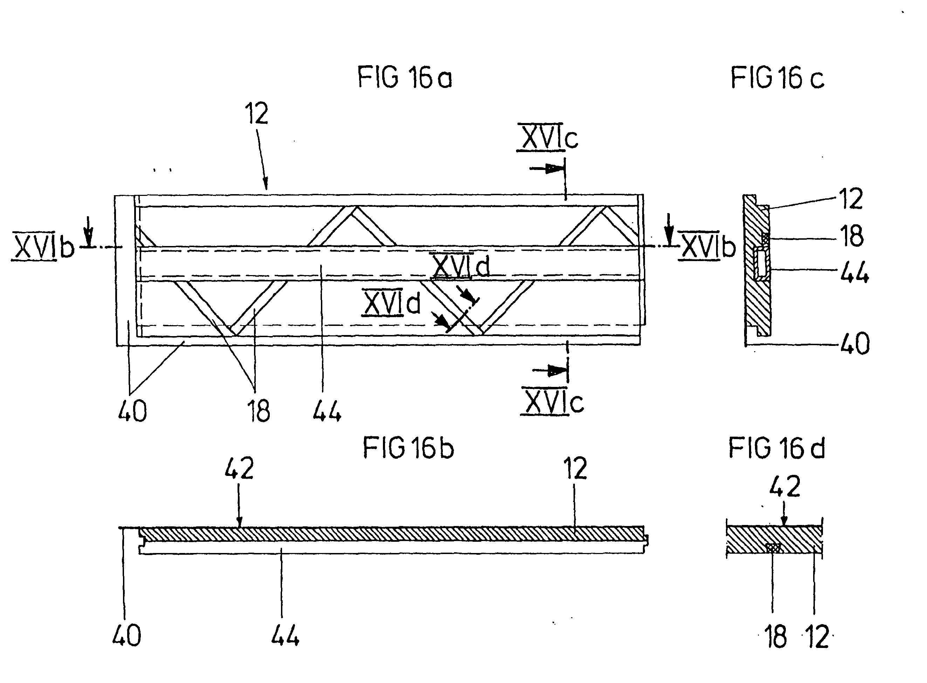

Die elfte Ausführungsform gemäß Figuren 15a-d und zwölfte Ausführungsform gemäß Figuren 16a-d sind im wesentlichen gleich ausgebildet wie die erste und zweite Ausführungsform gemäß Figuren 5a-d bzw. 6a-d, enthalten aber zusätzlich jeweils einen in Längsrichtung der Wärmedämmplatte 12 etwa mittig in derselben bündig mit ihrer Oberfläche angeordneten Luftschacht 44 von flachrechteckigem Querschnitt. Sie können so verlegt werden, daß die Luftschächte seitlich aneinanderliegender Wärmedämmplatten 12 ineinander übergehen.

## Patentansprüche

1. Rechteckige Wärmedämmplatte mit Befestigungsleiste(n), die bündig an oder nahe der Oberfläche der Wärmedämmplatte parallel zu dieser eingebettet ist bzw. sind, **dadurch gekennzeichnet, daß** die Befestigungsleiste(n) (18) mit den Rechteckseiten der Wärmedämmplatte (12) von Null verschiedene Winkel einschließt bzw. einschließen.

2. Wärmedämmplatte nach Anspruch 1, **dadurch gekennzeichnet, daß** das Material der Befestigungsleiste(n) (18) wärmedämmend ist.

3. Wärmedämmplatte nach Anspruch 2, **dadurch gekennzeichnet, daß** das Material recyclierter Polyurethan-Werkstoff ist, der aus Polyurethan-Granulat in Verbindung mit Bindemittel durch Pressen und ggfs. Wärmebehandlung gefertigt ist, eine Dichte von 500 - 900 kg/m³ sowie eine geringe Wärmeleitfähigkeit von etwa 0,07 W/K·m aufweist.

4. Wärmedämmplatte nach Anspruch 2 oder 3, **dadurch gekennzeichnet, daß** das Material schraubbar und verrottungsfest ist.

5. Wärmedämmplatte nach einem der vorangehenden Ansprüche, **dadurch gekennzeichnet, daß** sie wenigstens größtenteils aus Polyurethan besteht.

6. Wärmedämmplatte nach einem der vorangehenden Ansprüche, **dadurch gekennzeichnet, daß** sie einseitig oder beidseitig mit einer Deckschicht (42) versehen ist.

7. Wärmedämmplatte nach Anspruch 6, **dadurch gekennzeichnet, daß** die Deckschicht (42) einen auf zwei benachbarten Seiten der Wärmedämmplatte (12) überstehenden Rand (40) bildet.

8. Wärmedämmplatte nach einem der vorangehenden Ansprüche, **dadurch gekennzeichnet, daß** sie an zwei gegenüberliegenden Stirnflächen stufenförmige Ausfräsungen (28) zum Einhaken von Haltern (14) aufweist.

9. Wärmedämmplatte nach einem der vorangehenden Ansprüche, **dadurch gekennzeichnet, daß** sie bündig an oder nahe ihrer Oberfläche (26) einen Luftschacht (44) enthält, der parallel zu einer der Rechteckseiten verläuft.

## Claims

1. A rectangular heat insulation panel having a fastening batten or fastening battens which is or are embedded flush with or close to the surface of the heat insulation panel,
**characterised in that** the fastening batten or battens (18) encloses or enclose angles that are different from zero with the rectangular sides of the heat insulation panel (12).

2. A heat insulation panel according to Claim 1,
**characterised in that** the material of the fastening batten or battens (18) is heat insulating.

3. A heat insulation panel according to Claim 2,
**characterised in that** the material is recycled polyurethane material, which is produced from polyurethane granulate in conjunction with binding agents by pressing and possibly heat treatment, has a density of 500 - 900 kg/m³ and a low thermal conductivity of roughly 0.07 W/K·m.

4. A heat insulation panel according to Claim 2 or 3,
**characterised in that** the material is screwable and rot-resistant.

5. A heat insulation panel according to one of the preceding Claims,
**characterised in that** it is for the most part made from polyurethane.

6. A heat insulation panel according to one of the preceding Claims,
**characterised in that** it is provided with a covering layer (42) on one side or on both sides.

7. A heat insulation panel according to Claim 6,
**characterised in that** the covering layer (42) forms an edge (40) that projects on two adjacent sides of the heat insulation panel (12).

8. A heat insulation panel according to one of the preceding Claims,
**characterised in that** on two opposite end faces it comprises step-shaped holes (28) for hooking mounts (14).

9. A heat insulation panel according to one of the preceding Claims,
**characterised in that** flush with or close to its surface (26) it contains an air shaft (44) which runs parallel to one of the sides of the rectangle.

## Revendications

1. Panneau rectangulaire d'isolation thermique avec une (des) latte(s) de fixation, noyée(s) à fleur ou à proximité de la surface du panneau d'isolation thermique, parallèlement à celle-ci,
**caractérisé en ce que**
la (les) latte(s) de fixation (18) forme(nt) avec les côtés du rectangle du panneau d'isolation thermique (12) des angles différents de zéro.

2. Panneau d'isolation thermique selon la revendication 1,
**caractérisé en ce que**
la matière de la (des) latte(s) de fixation (18) est thermiquement isolante.

3. Panneau d'isolation thermique selon la revendication 2,
**caractérisé en ce que**
la matière est un matériau de polyuréthane recyclé, fabriqué à partir de granulés de polyuréthane en combinaison avec un liant par pressage et éventuellement traitement thermique, et qui présente une densité de 500 - 900 kg/m³ ainsi qu'une faible conductibilité thermique d'environ 0,07 W/K·m.

4. Panneau d'isolation thermique selon la revendication 2 ou 3,
**caractérisé en ce que**
la matière peut être vissée et est imputrescible.

5. Panneau d'isolation thermique selon l'une quelconque des revendications précédentes,
**caractérisé en ce qu'**
il se compose au moins pour la plus grande part de polyuréthane.

6. Panneau d'isolation thermique selon l'une quelconque des revendications précédentes,
**caractérisé en ce qu'**
il est pourvu d'une couche de recouvrement (42) sur une ou sur les deux faces.

7. Panneau d'isolation thermique selon la revendication 6,
**caractérisé en ce que**
la couche de recouvrement (42) forme un bord saillant (40) sur deux côtés adjacents du panneau d'isolation thermique (12).

8. Panneau d'isolation thermique selon l'une quelconque des revendications précédentes,
**caractérisé en ce qu'**
il présente, sur deux faces frontales opposées, des fraisages étagés (28) pour accrocher des attaches (14).

9. Panneau d'isolation thermique selon l'une quelconque des revendications précédentes,
**caractérisé en ce qu'**
il comporte, à fleur ou à proximité de sa surface (26), un puits d'aération (44) parallèle à un des côtés du rectangle.
